Europäisches Patentamt

(19) European Patent Office

Office européen des brevets

(11) Publication number: **0 189 249**
**B1**

(12) **EUROPEAN PATENT SPECIFICATION**

(45) Date of publication of patent specification: **08.03.89**

(21) Application number: **86300096.4**

(22) Date of filing: **08.01.86**

(51) Int. Cl.⁴: **F 16 D 13/64**

(54) Torsional vibration damper.

(30) Priority: **10.01.85 GB 8500622**

(43) Date of publication of application:
**30.07.86 Bulletin 86/31**

(45) Publication of the grant of the patent:
**08.03.89 Bulletin 89/10**

(84) Designated Contracting States:
**DE FR GB**

(56) References cited:
**EP-A-0 015 204**
**EP-A-0 019 525**
**FR-A-1 501 465**
**FR-A-2 548 299**
**FR-A-2 559 866**
**GB-A-2 040 398**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Curtis, Anthony John
8 Fellmore Grove Sydenham Estate
Leamington Spa Warwickshire (GB)**

(74) Representative: **Cundy, Anthony Brian
Anthony Cundy & Company 384 Station Road
Dorridge
Solihull West Midlands B93 8ES (GB)**

Courier Press, Leamington Spa, England.

## Description

This invention relates to torsional vibration dampers and particularly, but not exclusively, to such dampers which are utilised in driven plates of friction clutches of automobiles.

A problem associated with some automobiles is that during the periods when the transmission drive is under no load, rotary oscillations occur in the gearbox producing a phenomenon known as idle-rattle.

In order to damp out the vibrations which generate idle-rattle it is known to utilise a friction clutch driven plate in which the torque load through the driven plate passes through two sets of damping springs. Very light loads applied to the driven plate are taken through soft auxiliary vibration damping springing. When the limited angular movement controlled by the auxiliary damping springing has been taken up, normal drive load passes through a set of main torsion damping springs. In this way, very soft springing is provided over a limited range of movement for very light loads and this arrangement tends to prevent idle-rattle. Such a driven plate is known from French Patent Publication No. 1 501 465. Although the angular rotation available against the light auxiliary vibration damping springing is particularly desirable while the vehicle engine is idling, this movement can introduce a disadvantage while driving the vehicle. During a transision between a drive condition, when the engine is driving the vehicle, and an overdrive condition, when the engine is not transmitting any power and the vehicle is driving the engine, a noticeable transmission shock can occur as the engine traverses the range of movement of the soft springing. This phenomenon in known as "shunt".

It is already known, for example from Briitsh published patent specification GB-A-2 040 398 to provide a friction clutch driven plate of this kind in which a locking mechanism responsive to centrifugal force comes into operation at speeds in excess of for example 1000 RPM. This ensures that during normal driving conditions when the engine speed is substantially in excess of 1000 RPM, the auxiliary springing is inoperative. Also, during normal idling, when the engine speed is substantially below 100O RPM, the auxiliary springing comes into operation. However, there are occasions such as during fast idling as an engine is being warmed up when the idling speed exceeds 100O RPM. There are also occasions when the vehicle is driven slowly at an engine speed below 100O RPM and this is a condition in which it is very important to lock out the movement controlled by the auxiliary springing. For this reason, centrifugal control of the locking mechanism for the auxiliary springing can not be entirely satisfactory.

It is also known from European Patent Specification EP-A-0 019 525 to provide a torsional vibration damper of the kind comprising: a driven member; a driving member mounted co-axially with the driven member for limited relative rotation thereto; main torsion damping springing arranged in a driving connection between said members to control a range of said relative rotation; auxiliary torsion damping springing, weaker than the main torsion damping springing arranged in a driving connection between the members to control a further range of said relative rotation over which the main springing is ineffective; and selectively operable locking means arranged to lock the members against at least some of the relative rotation over which the main springing is ineffective, the locking means coming into operation in response to a predetermined angular movement between the members, in particular near the end of the movement against the auxiliary springing.

With this arrangement, the locking means comes into operation when the damper moves through the whole range of the auxiliary springing, even when there is no substantial torque to result in movement against the main springing.

An object of the present invention is to provide a torsional vibration damper with auxiliary damping against light springing which can be rendered ineffective when it is not required, without relying on engine speed as the fundamental control parameter and without locking the movement against the light springing during the movement against that light springing.

According to the invention there is provided a torsional vibration damper comprising: a driven member; a driving member mounted co-axially with the driven member for limited relative rotation thereto; main torsion damping springing arranged in a driving connection between said members to control a range of said relative rotation; auxiliary torsion damping springing, weaker than the main torsion damping springing arranged in a driving connection between the members to control a further range of 'said relative rotation over which the main springing is ineffective; and selectively operable locking means arranged to lock the damper against at least some of the relative rotation over which the main springing is ineffective, the locking means coming into operation in response to deflection under load of the main torsion damping springing.

Preferably the torsional vibration damper also comprises an intermediate member mounted co-axially with the driven member for limited relative rotation thereto; the main torsion damping springing being arranged in a driving connection between one of the driving and driven members and the intermediate member to control its range of relative rotation between the driving and driven members; the auxiliary torsion damping springing being arranged in a driving connection between the other of the driving and driven members and the intermediate member to control a further range of reltive rotation between the driving and driven members over which the main springing is ineffective; the locking means being arranged to lock the intermediate member against at least some of the rotation relative to said other of the driving and driven members.

Preferably the main torsion damping springing comprises circumferentially directed compression springs arranged in apertures in said one of the driving and driven members and in the intermediate member and the locking means is operable in response to initial compression of a main spring as it comes under load.

Preferably at least one spring aperture has a clearance at one end with respect to its associated spring, in the unloaded state of the damper, and the locking means is arranged to be operable by that spring as the clearance is taken up during initial movement under load applied to the damper to compress the main springs. Preferably the clearance is provided over only part of the end of the aperture, the spring engaging against another part of the aperture in the unloaded condition to prevent operation of the locking means.

The locking means may be held in its locking condition by centrifugal force at rotational speeds above a predetermined speed. This speed may for example be about 1500 RPM which is well above the highest speed required for engine idling in a car. The locking means comes into operation when drive is transmitted through the damper, regardless of the speed, the centrifugal locking being an auxiliary means to maintain the locking condition during slow torque reversals at high rotational speed.

The invention also extends to a friction clutch driven plate incorporating a torsional vibration damper according to the invention, the driving member constituting a friction facing carrier and the driven member constituting a hub member.

An embodiment of the invention will now be described by way of example only with reference to the accompanying drawings in which:

Figure 1 is an end elevation of a friction clutch driven plate incorporating a torsional vibration damper in accordance with the invention;

Figure 2 is a section on line II-II of figure 1;

Figure 3 is a diagrammatic representation of parts of the driven plate showing the locking means in an inoperative state with the driven plate completely unloaded;

Figure 4 is a view corresponding to figure 3 showing part of the intermediate member and a locking member thereon;

Figure 5 is a view corresponding to figure 3 but with all movement against auxiliary springing taken up in a drive direction and with the locking means still disengaged;

Figure 6 corresponds to figure 3 but shows the situation after initial deflection of the main springing and associated engagement of the locking means; and

Figure 7 corresponds to figure 3 but shows the driven plate in the overdrive condition with the locking member still engaged.

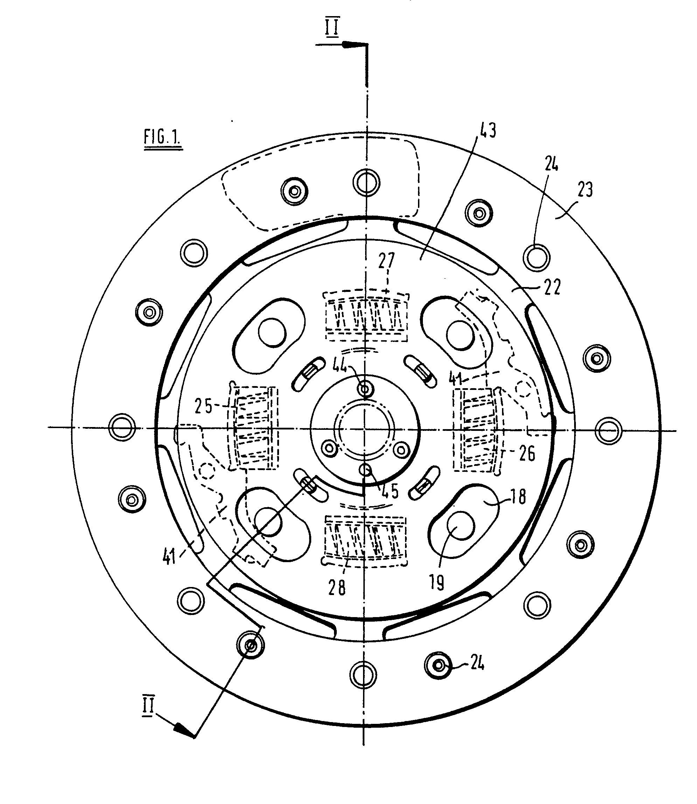

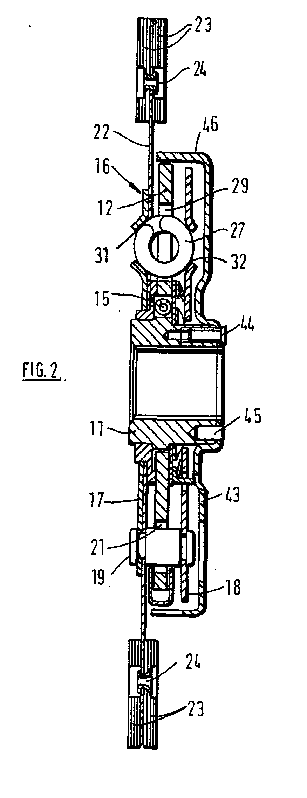

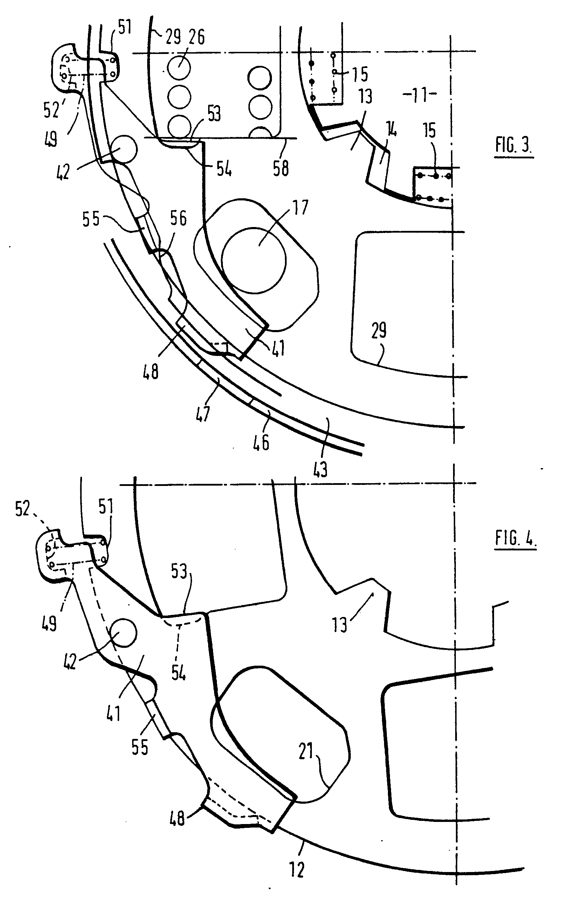

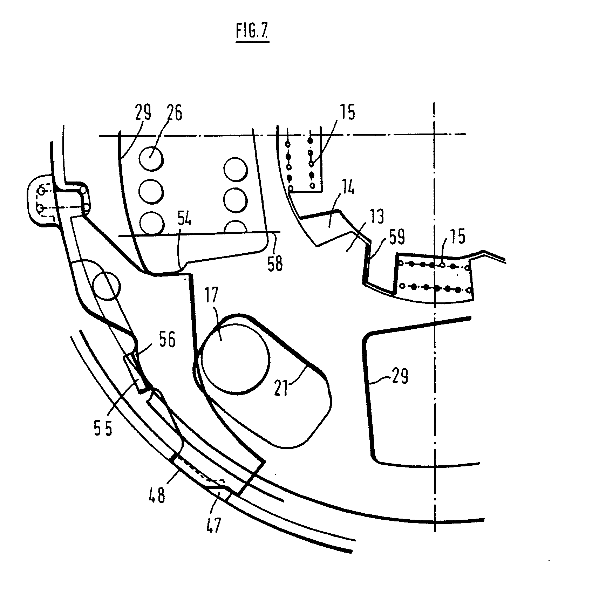

As shown in figures 1 and 2, a friction clutch driven plate incorporating a torsional vibration damper comprises a splined hub 11 intended for mounting on a gearbox input shaft. An intermediate member constituted primarily by an annular plate 12 is mounted for limited angular rotation on the hub 11. Angular rotation is restricted, as best seen by comparing figures 3 and 6, by a series of inwardly directed teeth such as 13 engaging in openings such as 14 in the hub. Circumferentially directed light compression springs such as 15 act between the hub 11 and the plate 12 so that with no external load, the parts take up the position shown in figure 3. In the example, the movement available for the plate 12 with respect to the hub 11 is 8° in a drive (anti clockwise) direction and 4.5° in an overdrive (clockwise) direction.

A friction facing carrier 16 is constituted primarily by two side plates 17 and 18 which are held together, one to each side of the plate 12 by a series of shouldered rivets hereafter referred to as stop pins 19 which pass through apertures 21 in plate 12. As can been seen from figure 3, the length of the stop pin apertures 21 limits the relative angular movement available between the intermediate member or plate 12 and the friction facing carrier 16. In this example, the movement available is 8° in the drive direction and 6° in the overdrive direction. A carrier plate 22 lies flush against the side plate 17 and is secured thereto by the riveting operation of the stop pins. Annular friction facings 23 are carried around the outer periphery of the carrier plate 22 by means of rivets 24.

In a conventional manner, the friction facing carrier constitutes a driving member and the hub constitutes a driven member of a torsional vibration damper incorporated in the driven plate.

A series of bearing elements, friction washers and axially directed annular springs serve to hold the friction facing carrier concentric with the hub and to locate both the friction facing carrier and the intermediate plate axially with respect to the hub. These components follow conventional clutch driven plate practice and are not described in detail.

As best seen in figure 1, there are four circumferentially directed main-torsion damping springs arranged in two pairs 25, 26 and 27, 28. Each spring is arranged in aligned circumferentially extending spring apertures 29, 31 and 32 in the intermediate plate 12 and the two side plates respectively. The lengths of these springs in relation to the apertures may be such that the springs 25 and 26 are arranged to come into operation immediately and thus to control the relative positions of the friction facing carrier and intermediate plate in the unladen condition whereas springs 27 and 28 may have some clearance in one of the windows, for example in the intermediate plate, so that they do not become effective until after a few degrees of movement of the friction facing carrier with respect to the intermediate plate. These springs 25 to 28 acting in their apertures constitute a main torsion damping springing effective between the friction facing carrier and the intermediate plate.

As thus far described, the characteristic of the driven plate is such that movement in the range plus 8° to minus 4.5° is available against the auxiliary springs 15 by virtue of movement of teeth 13 in openings 14 (see figure 3). Beyond this range, further movement of up to plus 8° or minus 6° is available against the main springing constituted by springs 25 to 28 as controlled by the stop pins 17 in the aperture 21. As thus far described, the whole of this movement is always available, the spring rates being such that the auxiliary springing is fully deflected in either direction before the main springs 25 to 28 are compressed.

The present invention is concerned with provision of locking means whereby all or most of the movement available between the hub and the intermediate member can be prevented when there is a requirement for a torque/deflection characteristic corresponding to that provided by the main springing only. The locking means is constituted primarily by a locking member 41 in the form of an arm which is pivotally mounted by a pin 42 on the interemediate plate 12. As can be seen in figure 1, there are two such locking members 41 arranged diametrically opposite each other but only one will be described in detail. The locking member itself is shown most clearly in figure 4 and its relationship with other parts is shown most clearly in figure 3.

The locking member co-operates with a locking disc 43 (best seen in figure 1) which is secured to the hub 11 by means of screws 44 and locating pins 45. The outer edge of the locking disc 43 is bent over to form a lip 46 and this lip incorporates a locking slot 47 for co-operation with the locking member 41 in a manner to be described.

The locking member 41 incorporates a latch 48 which is capable in some circumstances of engagement in the locking slot 47. A light compression spring 49 (see figure 4) is located in a notch 51 in intermediate plate 12 and in a pocket 52 in one end of the locking member and tends to pivot this locking member in such a direction as to retract the latch 48 so that it lies well inside the lip 46 incorporating the locking slot 47. The locking member 41 also has an abutment 53 in the vicinity of aperture 29 in the interemediate plate for the main torsion damping spring 26. The aperture 29 itself incorporates a recess 54 at the outer side of its end face. The length of spring 26 is such that it is just a snug fit in its aperture but in its free state does not extend into this recess 54. Abutment 53 is so positioned that when spring 26 does extend into recess 54, the spring acts on the locking member 41 and pivots it in a clockwise direction.

The locking member 41 also incorporates a non-return tab 55 which projects outwardly therefrom and is arranged to engage with a cam profile 56 formed by the outer edge of side plate 18 which is represented in figure 3 mainly by a single line showing the arcuate outer periphery and the cam profile. The cam profile 56 is arranged to cooperate in appropriate circumstances with the non-return tab 55 by engaging under the tab and ensuring that the locking member is held rotated in a clockwise direction. A further factor influencing the rotational position of the locking member 41 is that its centre of gravity is so positioned that centrifugal force generated on rotation of the driven plate tends to rotate the locking member in a clockwise direction. The balance between spring 49 and the centrifugal force may be such that the centrifugal effect overcomes the spring force when the driven plate rotational speed is about 1500 RPM.

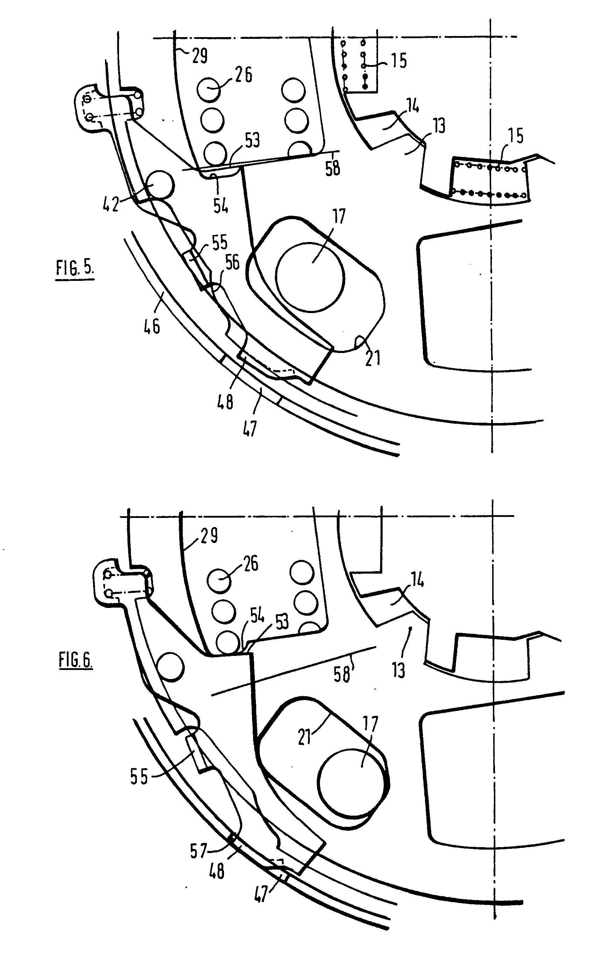

The operation of the locking means including the locking member 41 will now be described with reference to figures 3, 5, 6 and 7. Figure 3 shows the relative positions of the components when the driven plate is entirely unloaded. When a very light torque is applied to the friction facing carrier represented in figure 3 by a stop pin 17 and cam profile 56, the close fit of spring 26 in the windows of the carrier and the intermediate plate 12 are such that these components move in unison, causing deflection of auxiliary springs 15 and movement between the intermediate plate and the hub. Figure 5 shows the position after the full available movement of 8° against the auxiliary springs has taken place and in this position, the tooth 13 has engaged against one end face of its opening 14 to limit this movement. In this position, as also shown in figure 5, the latch 48 has taken up a position directly opposite the locking slot 47 but is held out of the locking slot by the load of compression spring 49. Corresponding movement against the force of springs 15 is available in an overdrive direction for the carrier and intermediate plate together with respect to the hub 12 to take up clearance in the opposite direction of teeth 13 in openings 14. In the conditions just described, the auxiliary springing operates in the normal way. This arrangement applies not only when the driven plate is almost stationery, but also throughout normal idling and up to speeds well beyond fast idling speed.

As soon as any substantial torque is applied in a drive direction to the friction facing carrier, all of the movement against the auxiliary springing is taken up to achieve the position shown in figure 5 and immediately thereafter, spring 26 becomes compressed by the applied load and acts against the abutment 53 of the locking member 41 to pivot the locking member into the position shown in figure 6. Further angular rotation of the carrier can then occur against the load of the main springs and the extreme limit of this movement is illustrated in figure 6 by the position of the stop pin 17 (part of the carrier) engaged against the end of its associated stop pin aperture 21 in the plate 12. This engagement of the latch 48 in locking slot 47 during transmission of drive torque occurs regardless of the speed of rotation of the driven plate. It should be explained that during this drive condition, there is a small clearance as shown at 57 between the latch 48 and its locking slot 47.

When the load applied to the driven plate between the friction facing carrier and the hub is reversed suddenly to an overdrive condition, the locking means operates to prevent almost all of the normally available movement against the auxiliary springs in a manner which will now be described. As the load is being reduced but is still in a drive direction, spring 26 continues to act on abutment 53 of locking member 41 to hold the locking member in the figure 6 position. When spring 26 becomes uncompressed and thus returns to its position shown in figure 5, the locking member remains in the position shown in figure 6 for a short time due to the inertia of the locking member and the lightness of spring 49. The inertia effect of having the centre of gravity of locking member 41 inward of its pivot point also helps to hold the locking member engaged while plate 12 is accelerating with the friction facing carrier in a clockwise direction (or decelerating in an anti clockwise direction). The arrangement is such that on a normal fast reversal of torque from drive to overdrive condition, the clearance 57 is taken up by relative movement between the hub and the intermediate plate before the latch 48 drops out of locking slot 47.

Engagement of the latch at the edge of the slot tends to hold it in position. During this stage of operation, the auxiliary springing is urging the intermediate plate back towards the postiion shown in figure 3 which helps to hold the latch 48 against the edge of the locking slot and thus to prevent the latch dropping out. To assist this function, the inter-engaging faces of the latch 48 and locking slot 47 may be inclined to the radial direction shown in the drawings to provide a hook like engagement of the latch. As a result of this continued engagement of the latch, the only relative movement available within the driven plate against the auxiliary springing is just sufficient to take up clearance 57. Thereafter, as overdrive torque is applied as a continuation of the removal of the drive torque, further relative movement within the driven plate is possible by compression of main spring 26 by an end surface of the side plate apertures represented by line 58 in figure 3 and figure 7. As the movement in an overdrive direction continues, the cam profile 56 on the outer periphery of side plate 18 moves clockwise relative to the intermediate plate and the locking member 41 with the result that this cam profile engages under the non-return tab 55 to hold the locking member in its locked condition. The situation at the extreme limit of movement allowed by stop pin 17 in stop pin aperture 21 is shown in figure 7. If there has been any tendency for the locking member 41 to begin to drop out, the combination of the cam profile and non-return tab ensures that the locking member is positively returned to its locking condition. As can be seen in figure 7, a small clearance 59 opens between the teeth 13 and the end face of the associated opening 14.

During continued torque reversals in either direction, the locking member remains in its locked condition so long as these torque reversals occur quickly. Also, once the engine speed has exceeded approximately 1500 RPM, the centrifugal force acting on the locking member 41 holds its latch 48 in locking slot 47 regardless of the nature of any transition between drive and overdrive conditions.

When drive through the driven plate in either direction is removed, the locking member drops out to its position as shown in figures 3 and 5 in the following manner. In the absence of any torque being transmitted, the spring 26 retracts from the recess 54 and the cam profile 56 retracts from under the non-return tab 55. The auxiliary springs 15 tend to return the hub and intermediate plate to the relative positions shown in figure 3 and during this situation the load of the auxiliary springs, resisted by the latch 48 in locking slot 47, can be sufficient to hold the latch in this situation for a short time. However, during torque reversals of the small magnitude encountered during idling, this very light load is reduced sufficiently at some stage to allow the spring 49 to pivot the locking member out of its locking slot into the position shown in figure 5. Thereafter, movement against the auxiliary springs 15 becomes possible between the hub and the intermediate plate to produce the required soft springing for damping out of idle rattle. This retraction occurs only when the engine speed is below 1500 RPM or sufficiently below 1500 RPM to allow time for the latch to drop out from its locking slot during reversal of the low torque associated with idling. However, even fast idling is normally at a speed well below 1500 RPM so the locking means should be no obstacle to restoration of effective auxiliary springing during idling.

The present invention thus provides a friction clutch driven plate with soft auxiliary springing as well as the conventional main springing and a locking means responsive to application of driving torque in excess of idling torque and which remains engaged during torque reversals associated with changes from drive to overdrive conditions.

It is possible to operate the vehicle in a driving mode in such a way that the locking means would allow the auxiliary springing to be effective. A primary condition for this is that the engine speed must be less than 1500 RPM or such other speed as is selected to cause centrifugal force to over come the force of spring 49. If, when operating at such a speed, a very gradual torque reversal occurs as a result of very delicate movement of the drivers accelerator pedal, the latch 48 can drop out from its locking slot 47 under the influence of spring 49 during the transition period between drive and overdrive when no torque is being transmitted. This however is not detrimental to vehicle operation because during such gradual changes from drive to overdrive there is no danger of a significant transmission shock as the end of the auxiliary springing movement is reached. Also, if latch 48 has been held completely or partially in its locking slot during initial relative movement between the hub and carrier against the main springs in the overdrive direction, the cam profile 56 engages the non-return tab 55 and ensures that the locking member 41 is rotated in a clockwise direction to provide full engagement of latch 48 in locking slot 47.

The cam profile 56 and non-return tab 55 provide an optional feature which may be omitted. Similarly the balance of the locking member 41 so as to provide a tendency to centrifugal engagement is optional or the locking member may be such that it pivots under centrifugal force only at very high speeds of say 3000 or 4000 RPM.

Although the invention has been described in connection with primary springing between the friction facing carrier and the intermediate member and the auxiliary springing between the intermediate member and the hub, the relative effective positions of the two sets of springing could be interchanged.

**Claims**

1. A torsional vibration damper comprising: a driven member; (11) a driving member (16) mounted co-axially with the driven member for limited relative rotation thereto (13 in 14 and 17 in 21); main torsion damping springing (25, 26, 27, 28) arranged in a driving connection between said members to control a range (17 in 21) of said relative rotation; auxiliary torsion damping springing (15), weaker than the main torsion damping springing, arranged in a driving connection between the members to control a further range (13 in 14) of said relative rotation over which the main springing is ineffective; and selectively operable locking means (41, 43) arranged to lock the damper against at least some of the relative rotation (13 in 14) over which the main springing is ineffective, characterised in that the locking means comes into operation (48 in 47) in response to deflection under load of the main torsion damping springing (26).

2. A torsional vibration damper as claimed in claim 1, characterised in that it further comprises an intermediate member (12) mounted co-axially with the driven member for limited relative rotation thereto (13 in 14); the main torsion damping springing (25, 26, 27, 28) being arranged in a driving connection between one of the driving and driven members (16) and the intermediate member (12) to control its range of relative rotation (17 in 21) between the driving and driven members; the auxiliary torsion damping springing (15) being arranged in a driving connection between the other of the driving and driven members (11) and the intermediate member (12) to control a further range (13 in 14) of relative rotation between the driving and driven members over which the main springing is ineffective; the locking means (41, 43) being arranged to lock the intermediate member (12) agaist at least some of the rotation (13 in 14) relative to said other of the driving and driven members (11).

3. A torsional vibration damper as claimed in claim 2 characterised in that the main torsion damping springing comprises circumferentially directed compression springs (25, 26, 27, 28) arranged in apertures in said one of the driving and driven members (31, 32 in 16) and in the intermediate member (29 in 27) and the locking means (41, 43) is operable in response to initial compression of the main springs (26) as they come under load.

4. A torsional vibration damper as claimed in claim 3 characterised in that at least one spring aperture (29) has a clearance (54) at one end with respect to its associated spring (26), in the unloaded state of the damper, and the locking means (47) is arranged to be operable by that spring as the clearance is taken up during initial movement under load applied to the damper to compress the main springs.

5. A torsional vibration damper as claimed in claim 4 characterised in that the clearance (54) is provided over only part of the end of the aperture (29), the spring (26) engaging against another part of the aperture in the unloaded condition to prevent operation of the locking means.

6. A torsional vibration damper as claimed in any one of the preceding claims characterised in that the locking means (47) is held in its locking condition by centrifugal force at rotational speeds above a predetermined speed.

7. A torsional vibration damper as claimed in any one of the preceding claims characterised in that it is incorporated in a friction clutch driven plate.

**Patentansprüche**

1. Drehschwingungsdämpfer mit einem angetriebenen Teil (11); einem treibenden Teil (16), das koaxial zu dem angetriebenen Teil für eine begrenzte Relativdrehung dazu angeordnet ist (13 in 14 und 17 in 21); einer Hauptdrehdämpfungsfedereinrichtung (25, 26, 27, 28), die in einer Treibverbindung zwischen den Teilen angeordnet ist, um einen Bereich (17 in 21) der Relativdrehung zu steuern; einer Zusatzdrehdämpfungsfedereinrichtung (15), die schwächer als die Hauptdrehdämpfungsfedereinrichtung ist, und in einer Treibverbindung zwischen den Teilen angeordnet ist, um einen weiteren Bereich (13 in 14) der Relativdrehung, in dem die Hauptdrehdämpfungsfedereinrichtung unwirksam ist, zu steuern; und einer wahlweisen betätigbaren Sperreinrichtung (41, 43), die dafür ausgebildet ist, den Dämpfer gegen zumindest einen Teil der Relativdrehung (13 in 14), in dem die Hauptfedereinrichtung unwirksam ist, zu sperren, dadurch gekennzeichnet, daß die Sperreinrichtung infolge einer unter Last auftretenden Verformung der Hauptdrehdämpfungsfedereinrichtung (26) in Betrieb kommt (48 in 47).

2. Drehschwingungsdämpfer nach Anspruch 1, dadurch gekennzeichnet, daß er ferner ein Zwischenteil (12) aufweist, das koaxial zu dem angetriebenen Teil für eine begrenzte Relativdrehung dazu (13 in 14) angeordnet ist; wobei die Hauptdrehdämpfungsfedereinrichtung (25, 26, 27, 28) in einer Treibverbindung zwischen einem der aus treibendem und angetriebenem Teil bestehenden Teile (16) und dem Zwischenteil (12) angeordnet ist, um seinen Bereich der Relativdrehung (17 in 21) zwischen dem treibenden und angetriebenen Teil zu steuern; wobei die Zusatzdrehdämpfungsfedereinrichtung (15) in einer Treibverbindung zwischen dem anderen der aus treibendem und angetriebenem Teil bestehenden Teile (11) und dem Zwischenteil (12) angeordnet ist, um einen weiteren Bereich (13 in 14) der Relativdrehung zwischen dem treibenden und angetriebenen Teil zu steuern, in dem die Hauptfedereinrichtung unwirksam ist;

wobei die Sperreinrichtung (41, 43) dafür ausgebildet ist, das Zwischenteil (12) gegen mindestens einen Teil der Drehung (13 in 14) relativ zu dem anderen der aus treibendem und angetriebenem Teil bestehenden Teile (11) zu sperren.

3. Drehschwingungsdämpfer nach Anspruch 2, dadurch gekennzeichnet, daß die Hauptdrehdämpfungsfedereinrichtung in Umfangsrichtung gerichtete Druckfedern (25, 26, 27, 28) aufweist, die in Fenstern in dem einen der aus treibendem und angetriebenem Teil bestehenden Teile (31, 32 in 16) und in dem Zwischenteil (29 in 27) angeordnet sind, und die Sperreinrichtung (41, 43) infolge der Anfangskompression der Hauptfedern (26), wenn sie belastet werden, betätigbar ist.

4. Drehschwingungsdämpfer nach Anspruch 3, dadurch gekennzeichnet, daß mindestens ein Federfenster (29) im unbelasteten Zustand des Dämpfers ein Spiel (54) an einem Ende gegenüber der zugehörigen Feder (26) hat, und die Sperreinrichtung (47) so ausgebildet ist, daß sie durch diese Feder betätigbar ist, wenn das Spiel während der Anfangsbewegung unter Last, die auf den Dämpfer aufgebracht wird, um die Hauptfedern zusammenzudrücken, überwunden wird.

5. Drehschwingungsdämpfer nach Anspruch 4, dadurch gekennzeichnet, daß das Spiel (54) über nur einen Teil des Endes des Fensters (29) vorhanden ist, wobei die Feder (26) an einem anderen Teil des Fensters im unbelasteten Zustand angreift, um den Betrieb der Sperreinrichtung zu verhindern.

6. Drehschwingungsdämpfer nach einem der vorhergehenden Ansprüche, dadurch gekennzeichnet, daß die Sperreinrichtung (47) durch die Zentrifugalkraft bei Drehgeschwindigkeiten über einer vorbestimmten Geschwindigkeit in ihrem Sperrzustand gehalten wird.

7. Drehschwingungsdämpfer nach einem der vorhergehenden Ansprüche, dadurch gekennzeichnet, daß er in eine angetriebene Reibungskupplungsscheibe eingebaut ist.

**Revendications**

1. Amortisseur de vibrations de torsion, comprenant un organe mené (11), un organe menant (16) monté coaxialement à l'organe mené afin qu'il présente une rotation relative limitée par rapport à lui (13 dans 14, et 17 dans 21), un ensemble principal à ressorts d'amortissement de torsion (25, 26, 27, 28) connecté entre lesdits organes afin qu'ils puissent s'entraîner mutuellement et destiné à travailler dans une plage (17 dans 21) de rotation relative, un ensemble auxiliaire à ressorts d'amortissement de torsion (15) moins puissant que l'ensemble principal à ressorts d'amortissement de torsion, connecté entre lesdits organes afin qu'ils s'entraînent mutuellement et destiné à travailler dans une plage supplémentaire (13 dans 14) de rotation relative dans laquelle l'ensemble principal à ressorts est inactif, et un dispositif de blocage (41, 43) qui peut être commandé sélectivement et qui est destiné à bloquer l'amortisseur pour une certaine rotation relative au moins (13 dans 14) pour laquelle l'ensemble principal à ressorts est inactif, caractérisé en ce que le dispositif de blocage est mis en fonctionnement (48 dans 47) à la suite du fléchissement sous charge de l'ensemble principal à ressorts d'amortissement de torsion (26).

2. Amortisseur de vibrations de torsion selon la revendication 1, caractérisé en ce qu'il comporte en outre un organe intermédiaire (12) monté coaxialement à l'organe mené afin qu'il présente une rotation relative limitée par rapport à lui (13 dans 14), l'ensemble principal à ressorts d'amortissement de torsion (25, 26, 27, 28) étant connecté entre l'un des organes menant et mené (16) et l'organe intermédiaire (12) de manière qu'ils puissent s'entraîner mutuellement et étant destiné à travailler dans sa plage de rotation relative (17 dans 21) entre les organes menant et mené, l'ensemble auxiliaire à ressorts d'amortissement de torsion (15) étant connecté entre l'autre des organes menant et mené (11) et l'organe intermédiaire (12) afin qu'ils s'entraînent mutuellement et étant destiné à travailler dans une autre plage (13 dans 14) de rotation relative entre les organes menant et mené dans laquelle l'ensemble principal à ressorts est inactif, le dispositif de blocage (41, 43) étant destiné à bloquer l'organe intermédiaire (12) pour une partie au moins de la rotation (13 dans 14) par rapport à l'autre des organes menant et mené (11).

3. Amortisseur de vibrations de torsion selon la revendication 2, caractérisé en ce que l'ensemble principal à ressorts d'amortissement de torsion comporte des ressorts de compression (25, 26, 27, 28) dirigés circonférentiellement et placés dans des ouvertures formées dans l'un des organes menant et mené (31, 32 dans 16) et dans l'organe intermédiaire (29 dans 27), et le dispositif de blocage (41, 43) travaille à la suite d'une compression initiale des ressorts principaux (26) lorsqu'ils sont mis sous charge.

4. Amortisseur de vibrations de torsion selon la revendication 3, caractérisé en ce qu'une ouverture au moins (29) de logement de ressort a un espace (54) formé à une première extrémité par rapport à son ressort associé (26), lorsque l'amortisseur n'est pas sous charge, et le dispositif de blocage (47) est destiné à être commandé par ce ressort lorsque cet espace est rempli lors du déplacement initial dû à l'application d'une charge à l'amortisseur et à la compression des ressorts principaux.

5. Amortisseur de vibrations de torsion selon la revendication 4, caractérisé en ce que ledit espace (54) est disposé sur une partie seulement de l'extrémité de l'ouverture (29), le ressort (26) étant au contact d'une autre partie de l'ouverture en l'absence de charge afin que le dispositif de blocage ne travaille pas.

6. Amortisseur de vibrations de torsion selon l'une quelconque des revendications précédentes, caractérisé en ce que le dispositif de blocage (47) est maintenu à l'état bloqué par la force centrifuge, à des vitesses de rotation supérieures à une vitesse prédéterminée.

7. Amortisseur de vibrations de torsion selon l'une quelconque des revendications précédentes, caractérisé en ce qu'il est incorporé à un disque mené d'embrayage à friction.

EP 0 189 249 B1

FIG. 1.

1

FIG. 2.

FIG. 3.

FIG. 4.

FIG.5.

FIG.6.

FIG.7